# EUROPÄISCHE PATENTSCHRIFT

(11) **EP 2 445 831 B1**
(45) Veröffentlichungstag und Bekanntmachung des Hinweises auf die Patenterteilung: **14.08.2013**
(21) Anmeldenummer: 10725697.6
(22) Anmeldetag: 17.06.2010
(51) Int. Cl.: C01B 7/04

(54) **VERFAHREN ZUR HERSTELLUNG VON CHLOR AUS HCI**
METHOD FOR PRODUCING CHLORINE FROM HCl
PROCÉDÉ DE PRODUCTION DE CHLORE À PARTIR DE HCl

(30) Priorität: 24.06.2009 EP 09163609
(43) Veröffentlichungstag der Anmeldung: 02.05.2012
(73) Patentinhaber: BASF SE, 67056 Ludwigshafen (DE)
(72) Erfinder: KARCHES, Martin, 67434 Neustadt (DE); BACHMANN, Kati, 68519 Viernheim (DE); SESING, Martin, 67165 Waldsee (DE); SEIDEMANN, Lothar, 67346 Speyer (DE); JACOBSEN, Knud, 67067 Ludwigshafen (DE)
(86) Internationale Anmeldenummer: PCT/EP2010/058523
(87) Internationale Veröffentlichungsnummer: WO 2010/149560

(56) Entgegenhaltungen:
- WO-A1-2005/077520
- WO-A1-2005/092488

## Beschreibung

Die Erfindung betrifft ein Verfahren zur Herstellung von Chlor durch Oxidation von Chlorwasserstoff in Gegenwart eines heterogenen partikelförmigen Katalysators nach dem Deacon-Verfahren in einem Wirbelschichtreaktor.

Ein Wirbelschichtreaktor zur Herstellung von Chlor durch Oxidation von Chtorwasserstoff nach dem Deacon-Verfahren ist beispielsweise in DE-A 10 2004 014 677 (=WO-A-2005/092488) beschrieben: Der Wirbelschichtreaktor umfasst ein Wirbelbett, enthaltend den heterogenen partikelförmigen Katalysator, der bevorzugt eine Metallkomponente auf einem oxidischen Träger enthält, beispielsweise Ruthenium- oder Kupferverbindungen auf Aluminiumoxid, insbesondere γ-Aluminiumoxid oder δ-Aluminiumoxid, Zirkoniumoxid, Titanoxid oder Mischungen hiervon. Dem Wirbelbett werden die Reaktionsgase über einen Gasverteiler zugeführt, wobei zur Steuerung der Temperaturverteilung innerhalb des Wirbelbettes mindestens ein Wärmetauscher angeordnet ist.

Die Oxidation von Chlorwasserstoff zu Chlor in Gegenwart eines heterogenen partikelförmigen Katalysators nach dem Deacon-Verfahren wird im Wirbelschichtreaktor bevorzugt bei Temperaturen im Bereich von 350 bis 450°C und Drücken im Bereich von 1 bis 11 bar absolut, insbesondere 2 bis 11 bar absolut, durchgeführt.

Um aus dem Wirbelbett die Reaktionswärme abzuführen, eignet sich insbesondere siedendes Wasser, da dieses große Wärmemengen bei konstanter Temperatur aufnehmen kann. Die Temperatur des Wassers ändert sich erst, wenn das gesamte Wasser verdampft ist. Die Siedetemperatur ist dabei abhängig vom Druck. Je höher der Druck des siedenden Wassers ist, desto höher ist die Siedetemperatur. Bevorzugt wird als Wärmetauscher ein Rohrbündelwärmetauscher eingesetzt.

Das Aufheizen eines Wirbelschichtreaktors in der Anfahrphase erfolgt üblicherweise durch Einspeisen eines vorgeheizten Inertgasstroms, in der Regel Stickstoff. Der Stickstoffstrom wird dabei durch Verbrennung von Erdgas auf eine hohe Temperatur gebracht. Während des Aufheizens sind die Wärmetauscherrohre geblockt, so dass sich in ihnen kein Wärmeträgermedium - üblicherweise Wasser - befindet. Erst wenn der Wirbelschichtreaktor die gewünschte Temperatur erreicht hat, werden die Wärmetauscherrohre mit dem Wärmeträgermedium beaufschlagt und werden die Eduktströme in den Wirbelschichtreaktor eingespeist und zur Reaktion gebracht.

Im Falle der katalytischen Chlorwasserstoff-Oxidation erfolgt das Aufheizen des Wirbelschichtreaktors mit ca. 400°C heißem Stickstoff, der in den Wirbelschichtreaktor eingespeist wird. Dies erfordert lange Aufheizzeiten, bis die gewünschte Reaktortemperatur von 380°C erreicht ist. Aus Gründen der Reaktorzulassung beträgt die zulässige Maximaltemperatur des zur Aufheizung eingespeisten Stickstoffs 450°C. Bei diesen Temperaturen kann es bereits zu einer unerwünschten Sinterung des Wirbelschichtkatalysators kommen. Beaufschlagt man erst bei Erreichen der gewünschten Reaktortemperatur von 380°C die Wärmetauscher mit Wasser, so kommt es zu Dampfschlägen (schlagartiges Verdampfen von Wasser in den Wärmetauscherrohren). Das kann zu Schäden an den Wärmetauschern, im schlimmsten Fall auch zu einem Rohrabriss führen.

Aufgabe der Erfindung ist es, ein Verfahren zum Betrieb eines Wirbelschichtreaktors bereitzustellen, bei dem der Wirbelschichtreaktor in vergleichsweise kurzer Zeit aufgeheizt und auf Betriebstemperatur gebracht wird.

Die Aufgabe wird gelöst durch ein Verfahren zur Herstellung von Chlor durch Oxidation von Chlorwasserstoff mit Sauerstoff in Gegenwart eines partikelförmigen Katalysators in einem Wirbelschichtreaktor, bei dem die Reaktionswärme der exothermen Chlorwasserstoff-Oxidation mit Wasser abgeführt wird, das in den Rohren eines Rohrbündelwärmetauschers zirkuliert, wobei (i) in einer Aufheizphase der Wirbelschichtreaktor auf eine Betriebstemperatur im Bereich von 380 bis 420°C aufgeheizt und (ii) in einer Betriebsphase bei der Betriebstemperatur Chlorwasserstoff mit Sauerstoff umgesetzt wird, dadurch gekennzeichnet, dass
(i-1) in einer ersten Aufheizphase der Wirbelschichtreaktor durch Einspeisen von heißem Stickstoff in den Reaktor auf eine Temperatur unterhalb der Betriebstemperatur aufgeheizt wird, und
(i-2) in einer zweiten Aufheizphase Chlorwasserstoff und Sauerstoff in den Wirbelschichtreaktor eingespeist und umgesetzt werden, wobei der Wirbelschichtreaktor durch die Reaktionswärme der exothermen Chlorwasserstoff-Oxidation auf die Betriebstemperatur aufgeheizt wird.

Während der ersten Aufheizphase wird der partikuläre Wirbelschichtkatalysator mit einem Inertgasstrom, im Allgemeinen aus Stickstoff, fluidisiert. Bevorzugt wird der Wirbelschichtreaktor in der ersten Aufheizphase (i-1) auf eine Temperatur im Bereich von 250 bis 330°C aufgeheizt.

Der Wirbelschichtreaktor wird in der ersten Aufheizphase (i-1) durch Einspeisen von heißem Stickstoff, optional in Kombination mit dem Beheizen des Rohrbündelwärmetauschers mit einem Wärmeträgermedium, welches in den Rohren des Wärmetauschers zirkuliert, aufgeheizt.

In einer Ausführungsform des erfindungsgemäßen Verfahrens wird in der ersten Aufheizphase (i-1) der Wirbelschichtreaktor durch Einspeisen von heißem Stickstoff in den Reaktor aufgeheizt. Im Allgemeinen beträgt die Temperatur des heißen Stickstoffs beim Einspeisen in den Reaktor 300 bis 500°C, bevorzugt 350 bis 450°C, beispielsweise 400°C. Die Gasgeschwindigkeit (GHSV) liegt vorzugsweise im Bereich von 39 bis 240 h⁻¹, insbesondere im Bereich von 39 bis 160 h⁻¹. Die GHSV ist dabei definiert als Stickstoffvolumenstrom pro Wirbelbettvolumen.

In einer weiteren Ausführungsform der Erfindung wird in der ersten Aufheizphase (i-1) in einem ersten Schritt der Wirbelschichtreaktor durch Beheizen des Rohrbündelwärmetauschers aufgeheizt, vorzugsweise auf eine Temperatur von 250 bis 280°C, beispielsweise 265°C, und in einem zweiten Schritt durch Einspeisung von heißem Stickstoff in den Reaktor weiter aufgeheizt, vorzugsweise auf eine Temperatur im Bereich von 310 bis 330°C, beispielsweise 320°C. auf. Im Allgemeinen wird der Rohrbündelwärmetauscher mit Wasserdampf beheizt, der in den Rohren des Rohrbündelwärmetauschers zirkuliert. Der Druck des Dampfes beträgt im Allgemeinen 16 bis 165 bar, seine Temperatur entsprechend 205 bis 350°C.

Nach Erreichen der Zieltemperatur in der ersten Aufheizphase (i-1) werden in einer zweiten Aufheizphase (i-2) die Edukte der Chlorwasserstoffoxidation in den Reaktor eingespeist und in Gegenwart des Wirbelschichtkatalysators zur Reaktion gebracht. Üblicherweise liegt das Molverhältnis Chlorwasserstoff : O₂ dabei zwischen 1 : 1 und 5 : 1. Das Eduktgasgemisch kann bis zu 20 Vol.-% Stickstoff enthalten. Im Allgemeinen enthält es 1 bis 15 Vol.%, bevorzugt 2 bis 7 Vol.-% Stickstoff. Der Druck beträgt während des Aufheizvorgangs vorzugsweise von 2 bis 11 bar, insbesondere von 3 bis 6 bar. Die Katalysatorbelastung liegt vorzugsweise im Bereich von 0,05 bis 1 kg HCl / (kg Kat. · h), insbesondere im Bereich von 0,1 bis 0,5 kg HCl / (kg Kat. ·h). Die Gasgeschwindigkeit (GHSV) liegt im Allgemeinen im Bereich von 39 bis 480 h⁻¹. Durch die freiwerdende Reaktionswärme der exothermen Chlorwasserstoff-Oxidation wird der Wirbelschichtreaktor auf die Betriebstemperatur aufgeheizt.

Während der zweiten Aufheizphase zirkuliert bereits Wasser in den Rohren des Rohrbündelwärmetauschers. Dadurch wird der Gefahr von Dampfschlägen begegnet.

Nach Erreichen der Betriebstemperatur wird die katalytische Chlorwasserstoffoxidation fortgesetzt. Dabei liegt das Molverhältnis Chlorwasserstoff : O₂ im Allgemeinen zwischen 1 : 1 und 5:1. Das Eduktgasgemisch enthält im Allgemeinen 1 bis 15 Vol.-% Stickstoff. Der Druck beträgt 1 bis 11 bar absolut, bevorzugt 2 bis 11 bar absolut. Die Katalysatorbelastung liegt im Allgemeinen im Bereich von 0,05 bis 1 kg HCl / (kg Kat. h), die Gasgeschwindigkeit (GHSV) beträgt im Allgemeinen von 39 bis 480 h⁻¹.

In einer Ausführungsform des erfindungsgemäßen Verfahrens wird der Wirbelschichtreaktor auf eine Temperatur von ca. 350°C aufgeheizt und während der Betriebsphase Chlorwasserstoff mit Sauerstoff in einem Anfangs-Molverhältnis von 1 : 2 umgesetzt, so dass ein HCl-Umsatz von ca. 70 % erzielt wird. Um einem Absinken des HCl-Umsatzes durch fortschreitende Deaktivierung des Katalysators entgegenzuwirken, wird die Temperatur allmählich auf bis zu 420°C erhöht. Die anfängliche Betriebstemperatur während der Betriebsphase kann auch darunter liegen und beispielsweise nur 330°C betragen, wobei der Umsatzgrad auch unter 70 %, beispielsweise bei 68 % liegen kann. Um diesen Umsatz zu halten, wird die Betriebstemperatur beispielsweise innerhalb von 325 Tagen auf ca. 400°C erhöht.

In einer bevorzugten Ausführungsform wird der Wirbelschichtreaktor auf 380°C hochgeheizt und die Betriebsphase mit einem anfänglichen Molverhältnis HCl : O₂ von 4 : 1 begonnen. Dabei wird ein Umsatz von ca. 70 % erreicht. Um einem Absinken des Umsatzes durch fortgesetzte Deaktivierung des Katalysators entgegenzuwirken, wird das HCl : O₂-Verhältnis auf bis zu 2 : 1 verringert. Wird der Umsatz von ca. 70 % auch bei einem HCl : O₂-Verhältnis von 2 : 1 nicht mehr gehalten, so kann zusätzlich noch die Temperatur erhöht werden, beispielsweise auf bis zu 420°C. So wird beispielsweise ein Umsatz von ca. 68 % gehalten, wenn bei einer Betriebstemperatur von 380°C gearbeitet wird und innerhalb von 120 Tagen das HCl : O₂-Verhältnis von 4 : 1 auf 3 : 1 gesenkt wird. Es wurde gefunden, dass trotz der höheren Temperatur der Katalysator nicht schneller deaktiviert. Vorteilhaft ist weiterhin, dass der Wirbelschichtreaktor bei einer höheren Durchschnittstemperatur, nämlich von 380°C, betrieben wird. Dabei wird in den Wärmetauschern ein Wasserdampf mit höherem Druck und höherer Temperatur erzeugt.

In einer weiteren Variante wird der Wirbelschichtreaktor auf eine Betriebstemperatur zwischen 350°C und 380°C aufgeheizt, wobei das HCl : O₂-Verhältnis zu Beginn der Betriebsphase zwischen 4 : 1 und 2 : 1 beträgt. Um einem Abfall des anfänglich erzielten Umsatzes entgegenzuwirken, kann man sowohl die Betriebstemperatur allmählich erhöhen als auch das HCl : O₂-Verhältnis allmählich absenken, oder beide Maßnahmen durchführen.

Erfindungsgemäß können weitere Maßnahmen zur Beheizung des Reaktors vorgesehen werden. So kann der Reaktorkopf zusätzlich über aufgelegte Heizschlangen mittels Dampf oder durch eine elektrische Heizung beheizt werden. Durch die zusätzliche Heizung kann der Reaktorkopf gleichzeitig mit dem Wirbelbett im unteren Teil des Reaktors aufgeheizt werden.

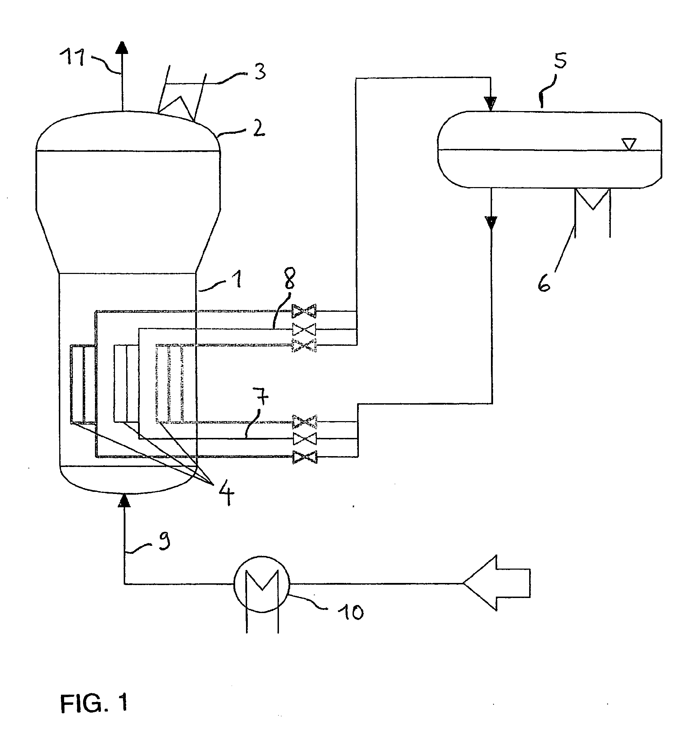

Die einzige Figur zeigt die schematische Darstellung einer Ausführungsform einer Anlage zur Durchführung des erfindungsgemäßen Verfahrens mit einem Wirbelschichtreaktor 1 umfassend einem Reaktorkopf 2 mit zusätzlicher Heizung 3, einen Dampfkreis umfassend einen Rohrbündelwärmetauscher 4 (hier dreiteilig ausgebildet), der im Wirbelschichtreaktor angeordnet ist, einer Dampftrommel 5 zur Erzeugung von Dampf mit einer Beheizung 6, die als Befeuerung oder als elektrische Heizung ausgebildet sein kann, Zuleitungen 7 und Rückleitungen 8 zwischen Dampftrommel und Rohrbündelwärmetauscher, einer Zuleitung 9 für die Eduktgase beziehungsweise für den heißen Stickstoff, einen Wärmetauscher 10 zum Beheizen der Eduktgase beziehungsweise des Stickstoffs sowie einer Ableitung 11.

Die Erfindung wird durch die nachstehenden Beispiele verdeutlicht.

### Beispiele

### Vergleichsbeispiel

Die Aufheizung eines Wirbelschichtreaktors von einer Ausgangstemperatur von 0°C auf die Betriebstemperatur von 380°C wurde rechnerisch simuliert. Dabei wurde eine Beheizung mit 400°C heißem Stickstoff, der über den Gasverteilerboden zugegeben wird, angenommen. Der Wärmetauscher des Wirbelschichtreaktors ist dabei nicht in Betrieb und nicht mit Wärmeträger- beziehungsweise Kühlmedium gefüllt.

Der Rechnung liegen weiterhin folgende Annahmen zugrunde:
Masse der Katalysatorpartikel: 70 t
spezifische Wärmekapazität der Katalysatorpartikel: 0,9 kJ/kg/K
Partikeldichte: 2400 kg/m³
Masse des Reaktors: 140 t
spezifische Wärmekapazität des Reaktors: 0,44 kJ/kg/K
Stickstoff-Massenstrom: 15 t/h
Starttemperatur: 0°C
Zieltemperatur: 380°C

Ergebnis: Zum Aufheizen des Reaktors inklusive Katalysator werden ca. 23,5 h benötigt.

### Beispiel

Das Aufheizen des Wirbelschichtreaktors wurde rechnerisch simuliert. Der Rechnung wurde ein dreistufiger Aufheizvorgang zugrunde gelegt. Dabei wird
i) in einer ersten Stufe durch Beheizen des Wärmetauschers mit 265°C heißem Dampf von 0°C bis auf ca. 250°C aufgeheizt,
ii) anschließend mit 400°C heißem Stickstoff auf ca. 320°C weiter aufgeheizt, wobei nach Erreichen einer Temperatur von 265°C kein Wärmeträgermedium mehr in den Rohren des Wärmetauschers zirkuliert, und
iii) bei Erreichen einer Temperatur von 320°C Chlorwasserstoff und Sauerstoff in den Wirbelschichtreaktor eingespeist und umgesetzt, und die dabei freiwerdende Reaktionswärme zum weiteren Aufheizen auf 380°C verwendet.

Der Rechnung lagen folgende weitere Annahmen zugrunde:
Masse der Katalysatorpartikel: 70 t
spezifische Wärmekapazität der Katalysatorpartikel: 0,9 kJ/kg/K
Partikeldichte: 2400 kg/m³
Masse des Reaktors: 140 t
spezifische Wärmekapazität des Reaktors: 0,44 kJ/kg/K
Wärmeübertragungsfläche: 62 m²
Wärmeübergangskoeffizient Dampf - Rohr: 20 W/m²/K
Wärmeübergangskoeffizient Rohr - Wirbelbett: 750 W/m²/K
Resultierender k-Wert: 19,5 W/m²/K
Dampftemperatur: 265°C
Dampfmenge: 100 t/h
spezifische Wärmekapazität des Dampfes: 4,5 kJ/kg/K
Chlorwasserstoff-Menge: 8,8 t/h
Verhältnis HCl : O₂: 4
Katalysatoraktivität: 1
Reaktordruck: 5 bar absolut

Ergebnis: Das Aufheizen i) mit 265°C heißem Dampf auf 250°C dauert ca. 4 h, das weitere Aufheizen ii) bis auf 320°C mit 400°C heißem Stickstoff dauert weitere 5 h, und das weitere Aufheizen iii) auf 380°C durch Ausnutzen der Reaktionswärme dauert ca. 1 h. Insgesamt beansprucht der gesamte Aufheizvorgang ca. 10,3 h.

## Patentansprüche

1. Verfahren zur Herstellung von Chlor durch Oxidation von Chlorwasserstoff mit Sauerstoff in Gegenwart eines partikelförmigen Katalysators in einem Wirbelschichtreaktor, wobei die Reaktionswärme der exothermen Chlorwasserstoff-Oxidation mit Wasser abgeführt wird, das in den Rohren eines Rohrbündetwärmetauschers zirkuliert, wobei (i) in einer Aufheizphase der Wirbelschichtreaktor auf eine Betriebstemperatur im Bereich von 350 bis 420°C aufgeheizt und (ii) in einer Betriebsphase bei der Betriebstemperatur Chlorwasserstoff mit Sauerstoff umgesetzt wird, **dadurch gekennzeichnet, dass**
(i-1) in einer ersten Aufheizphase der Wirbelschichtreaktor durch Einspeisung von heißem Stickstoff in den Reaktor auf eine Temperatur unterhalb der Betriebstemperatur aufgeheizt wird, und
(i-2) in einer zweiten Aufheizphase Chlorwasserstoff und Sauerstoff in den Wirbelschichtreaktor eingespeist und umgesetzt werden, wobei der Wirbelschichtreaktor durch die Reaktionswärme der exothermen Chlorwasserstoff-Oxidation auf die Betriebstemperatur aufgeheizt wird.

2. Verfahren nach Anspruch 1, **dadurch gekennzeichnet, dass** der Wirbelschichtreaktor in der ersten Aufheizphase (i-1) auf eine Temperatur im Bereich von 205 bis 350°C aufgeheizt wird.

3. Verfahren nach Anspruch 1 oder 2, **dadurch gekennzeichnet, dass** die Temperatur des Stickstoffs bei Einspeisung in den Reaktor 300 bis 400°C beträgt.

4. Verfahren nach einem der Ansprüche 1 bis 3, **dadurch gekennzeichnet, dass** in der ersten Aufheizphase (i-1) der Wirbelschichtreaktor durch Beheizen des Rohrbündelwärmetauschers mit einem Wärmeträgermedium, das in den Rohren des Wärmetauschers zirkuliert, aufgeheizt wird.

5. Verfahren nach Anspruch 4, **dadurch gekennzeichnet, dass** in der ersten Aufheizphase der Rohrbündelwärmetauscher mit Wasserdampf mit einem Druck in einem Bereich von 16 bis 165 bar und einer Temperatur im Bereich von 205 bis 350°C beheizt wird.

## Claims

1. A process for preparing chlorine by oxidation of hydrogen chloride by means of oxygen in the presence of a particulate catalyst in a fluidized-bed reactor, where the heat of reaction of the exothermic oxidation of hydrogen chloride is removed by means of water which circulates in the tubes of a shell-and-tube heat exchanger, where (i) the fluidized-bed reactor is heated up to an operating temperature in the range from 350 to 420°C in a heating-up phase and (ii) hydrogen chloride is reacted with oxygen in an operating phase at the operating temperature, wherein
(i-1) the fluidized-bed reactor is heated up to a temperature below the operating temperature by introduction of hot nitrogen into the reactor in a first heating-up phase and
(i-2) hydrogen chloride and oxygen are fed into the fluidized-bed reactor and reacted in a second heating-up phase in which the fluidized-bed reactor is heated up to the operating temperature by the heat of reaction of the exothermic oxidation of hydrogen chloride.

2. The process according to claim 1, wherein the fluidized-bed reactor is heated to a temperature in the range from 205 to 350°C in the first heating-up phase (i-1).

3. The process according to claim 1 or 2, wherein the temperature of the nitrogen on introduction into the reactor is from 300 to 400°C.

4. The process according to any of claims 1 to 3, wherein the fluidized-bed reactor is heated up by heating the shell-and-tube heat exchanger by means of a heat transfer medium which circulates in the tubes of the heat exchanger during the first heating-up phase (i-1).

5. The process according to claim 4, wherein the shell-and-tube heat exchanger is heated by means of steam having a pressure in the range from 16 to 165 bar and a temperature in the range from 205 to 350°C in the first heating-up phase.

## Revendications

1. Procédé pour la production de chlore par oxydation de chlorure d'hydrogène avec de l'oxygène en présence d'un catalyseur particulaire dans un réacteur à lit fluidisé, dans lequel la chaleur de réaction de l'oxydation exothermique du chlorure d'hydrogène est dissipée avec de l'eau qui circule dans les tubes d'un échangeur thermique à faisceau de tubes, (i) dans une phase de chauffe le réacteur à lit fluidisé étant chauffé jusqu'à une température de fonctionnement dans la plage de 350 à 420 °C et (ii) dans une phase de fonctionnement le chlorure d'hydrogène étant mis en réaction avec de l'oxygène à la température de fonctionnement, **caractérisé en ce que**
(i-1) dans une première phase de chauffe on chauffe le réacteur à lit fluidisé par introduction d'azote chaud dans le réacteur, jusqu'à une température inférieure à la température de fonctionnement, et
(i-2) dans une deuxième phase de chauffe on introduit du chlorure d'hydrogène et de l'oxygène dans le réacteur à lit fluidisé et on les fait réagir, le réacteur à lit fluidisé étant porté à la température de fonctionnement par la chaleur de réaction de l'oxydation exothermique du chlorure d'hydrogène.

2. Procédé selon la revendication 1, **caractérisé en ce que** dans la première phase de chauffe (i-1) le réacteur à lit fluidisé est chauffé jusqu'à une température dans la plage de 205 à 350 °C.

3. Procédé selon la revendication 1 ou 2, **caractérisé en ce que** la température de l'azote lors de l'introduction dans le réacteur vaut de 300 à 400 °C.

4. Procédé selon l'une quelconque des revendications 1 à 3, caractérisé en ce dans la première phase de chauffe (i-1) le réacteur à lit fluidisé est chauffé par chauffage de l'échangeur thermique à faisceau de tubes avec un milieu caloporteur qui circule dans les tubes de l'échangeur thermique.

5. Procédé selon la revendication 4, **caractérisé en ce que** dans la première phase de chauffe l'échangeur thermique à faisceau de tubes est chauffé avec de la vapeur d'eau sous une pression dans une plage de 16 à 165 bars et à une température dans la plage de 205 à 350 °C.
